(19) Europäisches Patentamt
European Patent Office
Office européen des brevets

(11) EP 4 148 683 A1

(12) EUROPÄISCHE PATENTANMELDUNG

(43) Veröffentlichungstag:
15.03.2023 Patentblatt 2023/11

(51) Internationale Patentklassifikation (IPC):
G06V 10/143 (2022.01)    G06V 20/56 (2022.01)

(21) Anmeldenummer: 22194388.9

(52) Gemeinsame Patentklassifikation (CPC):
G06V 10/143; G06V 20/588; G06V 10/14

(22) Anmeldetag: 07.09.2022

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 10.09.2021 DE 102021210047
14.02.2022 DE 102022201522

(71) Anmelder:
• Fraunhofer-Gesellschaft zur Förderung
der angewandten Forschung e.V.
80686 München (DE)
• Intel Deutschland GmbH
85579 Neubiberg (DE)

(72) Erfinder:
• DUMLER, Dietrich
80686 München (DE)
• WENNINGER, Franz
80686 München (DE)
• GERNER, Wolfgang
85579 Neubiberg (AT)
• GOSSNER, Harald
85579 Neubiberg (DE)

(74) Vertreter: Stöckeler, Ferdinand et al
Schoppe, Zimmermann, Stöckeler
Zinkler, Schenk & Partner mbB
Patentanwälte
Radlkoferstrasse 2
81373 München (DE)

(54) **EINE VORRICHTUNG UND EIN VERFAHREN ZUM ERKENNEN EINES ZUSTANDS EINER FAHRBAHNOBERFLÄCHE**

(57) Ausführungsbeispiele der Erfindung schaffen eine Vorrichtung (100) zum Erkennen eines Zustands (160, 170) einer Fahrbahnoberfläche (210). Die Vorrichtung (100) weist eine Eingangsschnittstelle (110), einen Bildteiler (120), einen Parameterberechner (130) und einen Klassifizierer (140) auf. Die Eingangsschnittstelle (110) ist ausgebildet, um eine Aufnahmeinformation (150, 220) der Fahrbahnoberfläche (210), wie zum Beispiel eine Kameraaufnahme, zu erhalten. Der Bildteiler (120) ist ausgelegt, um die Aufnahmeinformation (150, 220) in eine Mehrzahl von Fenstern (123, 126, 129, 226, 229) aufzuteilen, wobei jedes Fenster (123, 126, 129, 226, 229) eine Mehrzahl von Bildelementen (135) aufweist und wobei jedes Bildelement (135) wenigstens zwei verschiedene Informationen, wie zum Beispiel spektrale Absorption der Fahrbahnoberfläche und/oder Polarisation des reflektierten Lichts, aufweist. Der Parameterberechner (130) ist ausgebildet, um wenigstens zwei Parameter pro Fenster (123, 126, 129, 226, 229) unter Verwendung der wenigstens zwei verschiedenen Informationen jedes Bildelementes (135) in dem Fenster (123, 126, 129, 226, 229) zu berechnen. Der Klassifizierer (140) ist ausgelegt, um das Fenster (123, 126, 129, 226, 229) anhand eines Tupels (143) aus den wenigstens zwei Parametern des Fensters (123, 126, 129, 226, 229) zu klassifizieren, und um anhand des Tupels (143) aus den wenigstens zwei Parametern des Fensters (123, 126, 129, 226, 229) als Eingangswerte einen Zustand (160, 170) des Fensters (123, 126, 129, 226, 229) zu erkennen und den Zustand (160, 170) des Fensters (123, 126, 129, 226, 229) als Ausgangswert (160, 170) auszugeben.

Fig. 1

**Beschreibung**

Beschreibung

Die vorliegende Anmeldung betrifft eine Vorrichtung und ein Verfahren zum Erkennen eines Zustands einer Fahrbahnoberfläche.

Die Erkennung der Straßenverhältnisse ist unerlässlich für ein sicheres Fahren. Moderne Fahrzeuge schätzen allgemeine Risiken der Straßenverhältnisse mithilfe von Sensoren, wie zum Beispiel mit optischen Sensoren.

Die Situation vor einem Fahrzeug wird beispielsweise mit einer Kamera aufgenommen. Auf einem Rot-Grün-Blau- (RGB-) Bild ist es schwierig, zum Beispiel einen nassen Fleck von einem schmutzigen Fleck auf einer Fahrbahnoberfläche zu unterscheiden, da beide einfach nur dunkel sind. Obwohl Wasser transparent ist, ist Wasser in RGB-Bildern aufgrund verschiedener Effekte, die den Weg eines Lichtstrahls verändern, leicht sichtbar. Gängige Objekterkennungsverfahren (object detection) verwenden RGB-Daten, um Objekte, wie zum Beispiel Passanten, zu erkennen. Objekte, wie Pfützen, mit simplen Formen und mit komplexen optischen Verhalten, wie starke Reflexion oder Transparenz, sind jedoch schwer zu erkennen. Umweltvariablen, wie Tageslicht, Hintergrund und Untergrund, verändern das Erscheinungsbild witterungsbedingter Ablagerungen erheblich, was die Erkennung noch weiter erschwert.

RGB-Kameras oder RGB-Bildsensoren können die verschiedenen Effekte, wie Absorption und/oder Polarisation, nicht bestimmen. Daher sind die Ergebnisse des Lokalisierungs- und Klassifizierungsverfahrens stark fallabhängig und unzuverlässig.

Die Aufgabe der vorliegenden Erfindung besteht deshalb darin, ein zuverlässiges, robustes Konzept zum Erkennen eines Zustands einer Fahrbahnoberfläche zu schaffen.

Diese Aufgabe wird durch eine Vorrichtung nach Anspruch 1, durch ein Fortbewegungsmittel nach Anspruch 13, durch ein Verfahren nach Anspruch 14, oder durch ein Computerprogramm nach Anspruch 15 gelöst.

Ausführungsbeispiele der Erfindung schaffen eine Vorrichtung zum Erkennen eines Zustands einer Fahrbahnoberfläche. Die Vorrichtung weist eine Eingangsschnittstelle, einen Bildteiler, einen Parameterberechner und einen Klassifizierer auf.

Die Eingangsschnittstelle ist ausgebildet, um eine Aufnahmeinformation der Fahrbahnoberfläche, wie zum Beispiel eine Kameraaufnahme, zu erhalten.

Der Bildteiler ist ausgelegt, um die Aufnahmeinformation in eine Mehrzahl von Fenstern aufzuteilen, wobei jedes Fenster eine Mehrzahl von Bildelementen aufweist und wobei jedes Bildelement wenigstens zwei verschiedene Informationen wie zum Beispiel eine spektrale Absorption der Fahrbahnoberfläche und/oder eine Polarisation des reflektierten Lichts aufweist.

Der Parameterberechner ist ausgebildet, um wenigstens zwei Parameter pro Fenster unter Verwendung der wenigstens zwei verschiedenen Informationen jedes Bildelementes in dem Fenster zu berechnen.

Der Klassifizierer ist ausgelegt, um das Fenster anhand eines Tupels aus den wenigstens zwei Parametern des Fensters zu klassifizieren. Der Klassifizierer ist ausgebildet, um anhand des Tupels aus den wenigstens zwei Parametern des Fensters als Eingangswerte einen Zustand des Fensters zu erkennen und den Zustand des Fensters der Aufnahmeinformation auszugeben.

In anderen Worten verwendet die erfinderische Vorrichtung eine fensterweise bzw. elementare Klassifizierung. Diese elementare Klassifizierung basiert auf einer Extraktion der optischen Eigenschaften von Fahrbahnoberflächen aus den Sensoraufnahmen, im Speziellen durch Evaluierung der spektralen Absorption der Fahrbahnoberfläche und/oder Polarisation des reflektierten Lichts.

Eine elementare bzw. fensterweise Klassifizierung erhöht die Widerstandsfähigkeit der Vorrichtung gegen Bildelementfehler, da bei einer fensterweisen Klassifizierung ein Bildelementfehler nur lokale Auswirkungen hat.

Die fensterweise Klassifizierung ermöglicht eine fensterweise Evaluierung. Die Güte der Klassifizierung kann durch einen Vergleich des Fensters mit dem Ergebnis der Klassifizierung bestimmt werden.

Ferner verwendet der erfinderische Bildsensor einen verringerten Rechenaufwand gegen-über einer gängigen Objektdetektion für die Erkennung eines Zustands einer Fahrbahnoberfläche.

Somit schafft der Bildsensor eine zuverlässige und robuste Erkennung eines Zustands einer Fahrbahnoberfläche und gleichzeitig eine einfache, fensterweise Evaluierung.

Bei Ausführungsbeispielen ist die Eingangsschnittstelle ausgebildet, um entweder die Ausgabeinformation von einem Sensor zu erhalten, oder um mehrere Sensoraufnahmen zu erhalten und die Aufnahmeinformation aus den erhaltenen Sensoraufnahmen zusammenzustellen. Die Aufnahmeinformation der Fahrbahnoberfläche weist pro Bildelement wenigstens zwei Sensoraufnahmen aus einer Gruppe von wenigstens vier Sensoraufnahmen auf.

Die Gruppe von Sensoraufnahmen weist eine erste Sensoraufnahme der Fahrbahnoberfläche mit einer ersten optischen Bandbreite auf, in der das Wasser eine erste Absorptionsrate hat.

Die Gruppe von Sensoraufnahmen weist eine zweite Sensoraufnahme der Fahrbahnoberfläche mit einer zweiten optischen Bandbreite auf, in der das Wasser eine zweite Absorptionsrate hat, die höher als die erste Absorptionsrate ist.

Die Gruppe von Sensoraufnahmen weist eine dritte Sensoraufnahme mit einem ersten Polarisationsfilter mit einem ersten Polarisationswinkel auf.

Die Gruppe von Sensoraufnahmen weist noch eine vierte Sensoraufnahme mit einem zweiten Polarisationsfilter mit einem zweiten Polarisationswinkel auf, der sich von dem ersten Polarisationswinkel unterscheidet.

Die Aufnahmeinformation der Fahrbahnoberfläche weist pro Bildelement wenigstens zwei Sensoraufnahmen auf.

Absorptionsinformationen ermöglichen konkrete Materialien mit bestimmen Absorptionseigenschaften in der Aufnahme leichter zu finden.

Beispielsweise, die Verwendung einer ersten und einer zweiten Sensoraufnahme mit unterschiedlichen optischen Bandbreiten, in denen das Wasser unterschiedliche Absorptionsraten hat, ermöglicht eine Erkennung von Wasser auf einer Fahrbahnoberfläche.

Sensoraufnahmen mit Polarisationsfiltern ermöglichen es, die an der Oberfläche reflektierenden Lichtstrahlen zu analysieren. Beispielsweise, die Reflexion von flüssigem Wasser zeigt ein hohes Polarisationsverhältnis des Lichts mit vorwiegend horizontaler Ausrichtung, während die Eiskristalle den Lichtstrahl streuen und eine Rotation der Welle verursachen. Eiskristalle ergeben eine stärker gestreute Polarisation mit leicht verschobener Orientierung.

Beispielsweise, die Verwendung von Sensoraufnahmen mit Polarisationsfiltern mit unterschiedlichen Polarisationswinkeln ermöglicht eine Unterscheidung zwischen Wasser, Schnee und Glatteis.

Bei Ausführungsbeispielen weist die erste optische Bandbreite eine Bandbreite auf, die aus einem Spektralbereich zwischen 400 nm und 900 nm ausgewählt ist. Gleichzeitig weist die zweite optische Bandbreite eine Bandbreite auf, die aus einem Spektralbereich zwischen 900 nm und 1200 nm ausgewählt ist.

Durch eine oben genannte Auswahl der ersten optischen Bandbreite und der zweiten optischen Bandbreite wird ein optimaler Intensitätsunterschied in Bereichen mit Wasser zwischen den Aufnahmen ermöglicht.

Bei Ausführungsbeispielen weist die erste optische Bandbreite bei einer Halbwertbreite einen Wert zwischen 820 nm und 870 nm und die zweite optische Bandbreite bei der Halbwertbreite einen Wert zwischen 920 nm und 970 nm auf.

Durch eine optimale Auswahl der ersten optischen Bandbreite und der zweiten optischen Bandbreite wird ein möglichst maximaler Intensitätsunterschied in Bereichen mit Wasser zwischen den Aufnahmen ermöglicht.

Bei Ausführungsbeispielen sind die Polarisationswinkel des ersten Polarisationsfilters und der Polarisationswinkel des zweiten Polarisationsfilters 90° zueinander versetzt dimensioniert.

Gleichmäßig verteilte Polarisationswinkel liefern die meisten Informationen über die an der Oberfläche reflektierenden Lichtstrahlen. Zwei Polarisationsfilter liefern schon ausrei-chende Informationen über die Polarisationsebene des Lichtstrahls.

Bei Ausführungsbeispielen weist der Klassifizierer einen Speicher auf, in dem für jedes Eingangstupel einer Mehrzahl von möglichen Tupeln eine zugeordnete Zustandsinformation einer Mehrzahl von verschiedenen Zustandsinformationen abgespeichert ist. Die Mehrzahl von verschiedenen Zustandsinformationen weist z. B. einen Zustand trocken, einen Zustand nass, einen Zustand Schnee und einen Zustand Glatteis auf.

Die Verwendung eines Klassifizierers, der die Zustandsinformationen der möglichen Zustände, wie zum Beispiel "nass", "trocken", "Schnee" und "Glatteis", speichert und der die Zustandsinformationen mit einem Eingangstupel vergleicht, verringert den benötigten Rechenaufwand gegenüber den gängigen Verfahren, wie zum Beispiel Bilderkennung.

Bei Ausführungsbeispielen ist der Klassifizierer ausgebildet, um die wenigstens zwei Parameter des Tupels auf Werte aus einem vorhandenen Eingangstupel zu runden, und dann unter Verwendung des vorhandenen Eingangstupels auf den Speicher zuzugreifen, um den Zustand für das Fenster zu erhalten.

Bei anderen Ausführungsbeispielen ist der Klassifizierer ausgebildet, um auf der Basis des Tupels für das Fenster ein Eingangstupel, das dem Tupel für das Fenster gemäß einem Kriterium auszuwählen. Das Kriterium ist beispielsweise eine kleinste aufaddierte quadratische Abweichung der wenigstens zwei Parameter des Tupels für das Fenster von den vorhandenen Eingangstupeln. Der Klassifizierer ist dann ausgebildet, um mit dem gewählten Tupel auf den Speicher zuzugreifen und den Zustand für das Fenster zu erhalten.

Der Speicher des Klassifizierers kann nicht alle Zustandsinformationen der möglichen Zustände aufweisen. Sind die wenigstens zwei Parameter des Tupels nicht im Speicher des Klassifizierers zu finden, kann der Klassifizierer die Parameter vor dem Vergleich leicht verändern. So sind die geänderten Parameter des Tupels in dem Speicher nun auffindbar. Dadurch bleibt der Zustand des Fensters erkennbar.

Bei Ausführungsbeispielen ist der Klassifizierer ausgebildet, um für jedes der Mehrzahl von Fenstern ein eigenes Tupel zu verwenden, um anhand jedes Tupels einen Zustand jedes Fensters zu erkennen und den Zustand jedes Fensters der Aufnahmeinformation der Fahrbahnoberfläche als Ausgangsgröße auszugeben. Somit ergibt sich eine fensterweise bzw. elementare Klassifizierung.

Die fensterweise Klassifizierung erhöht die Widerstandsfähigkeit der Vorrichtung gegen Bildelementfehler. Bildelemente eines Fensters können nur den Zustand des Fensters beeinflussen. Die Auswirkung eines Bildelementes oder Bildelementfehlers ist auf das Fenster begrenzt.

Die fensterweise Klassifizierung ermöglicht auch eine fensterweise Evaluierung. Die Güte der Klassifizierung kann nun durch einen Vergleich des Fensters mit dem Ergebnis der Klassifizierung bestimmt werden.

Bei Ausführungsbeispielen ist der Klassifizierer ausgebildet, um unter Verwendung von Zuständen von benachbarten Fenstern zusammenhängende Bereiche aus mehreren nebeneinander angeordneten Fenstern blockweise zu klassifizieren.

Nun werden zusammenhängende Bereiche definiert, die aus mehreren nebeneinander angeordneten Fenstern entstehen. Die Bestimmung der Grenzen von zusammenhängenden Bereichen ist sehr nützlich, um verschiedene Gefahren in Fahrsituationen zu vermeiden.

Bei Ausführungsbeispielen ist der Parameterberechner ausgebildet, um wenigstens zwei Parameter aus der Gruppe Absorptionskontrastparameter, Polarisationskontrastparameter und Reflexionsintensitätsparameter zu berechnen.

Der Absorptionskontrastparameter wird zum Beispiel derart berechnet, dass der Wert des Absorptionskontrastparameters eine Zahl innerhalb von $\pm20\%$ eines Ergebnisses der folgenden Formel aufweist:

$$abs_{contrast} = \frac{1}{n}\sum_{i=1}^{n}\frac{I_{850}(i)-I_{950}(i)}{I_{850}(i)+I_{950}(i)},$$

dabei sind:

$abs_{contrast}$:  das Ergebnis;
n:  Bildelementanzahl im Fenster;
i:  Index eines Bildelements im Fenster;
$I_{850}(i)$:  Intensitätswert der ersten Sensoraufnahme des i-ten Bildelements im Fenster, und
$I_{950}(i)$:  Intensitätswert der zweiten Sensoraufnahme des i-ten Bildelements im Fenster.

Der Polarisationskontrastparameter wird zum Beispiel derart berechnet, dass der Wert des Absorptionskontrastparameters eine Zahl innerhalb von $\pm20\%$ eines Ergebnisses der folgenden Formel aufweist:

$$pol_{contrast} = \frac{1}{n}\sum_{i=1}^{n}\frac{I_{pol1}(i)-I_{pol2}(i)}{I_{pol1}(i)+I_{pol2}(i)},$$

dabei sind:

$pol_{contrast}$:  das Ergebnis;
n:  Bildelementanzahl im Fenster;
i:  Index eines Bildelements im Fenster;
$I_{pol1}(i)$:  Intensitätswert der dritten Sensoraufnahme des i-ten Bildelements im Fenster, und
$I_{pol2}(i)$:  Intensitätswert der vierten Sensoraufnahme des i-ten Bildelements im Fenster.

Der Reflexionsintensitätsparameter wird zum Beispiel derart berechnet, dass der Wert des Reflexionsintensitätsparameters eine Zahl innerhalb von $\pm20\%$ eines Ergebnisses der folgenden Formel aufweist:

$$ref_{mean} = \frac{1}{n}\sum_{i=1}^{n}\frac{I_{pol1}(i)+I_{pol2}(i)+I_{850}(i)}{3},$$

dabei sind:

$ref_{mean}$:  das Ergebnis;
n:  Bildelementanzahl im Fenster;
i:  Index eines Bildelements im Fenster;
$I_{pol1}(i)$:  Intensitätswert der dritten Sensoraufnahme des i-ten Bildelements im Fenster,
$I_{pol2}(i)$:  Intensitätswert der vierten Sensoraufnahme des i-ten Bildelements im Fenster, und
$I_{850}(i)$:  Intensitätswert der ersten Sensoraufnahme des i-ten Bildelements im Fenster.

Bei Ausführungsbeispielen ist der Bildteiler ausgebildet, um die Aufnahmeinformation in eine Mehrzahl von nicht überlappenden Fenstern aufzuteilen.

Die Anzahl der nicht überlappenden Fenster ist deutlich weniger als die Anzahl der möglichen überlappenden Fenster. Eine Reduzierung der Anzahl der Fenster auf die Anzahl der nicht überlappenden Fenster erspart Rechenaufwand.

Bei Ausführungsbeispielen ist der Bildteiler ausgebildet, um die Aufnahmeinformation in eine Mehrzahl von Fenstern mit positionsabhängiger Fenstergröße aufzuteilen, wobei das Fenster, das einen nahen Fahrbahnoberflächenteil repräsentiert größer ist als das Fenster, das einen fernen Fahrbahnoberflächenteil repräsentiert.

Bei einer positionsabhängigen oder dynamischen Fenstergröße wird die Fenstergröße anhand der Position des Fensters automatisch geregelt. Eine optimale Fenstergröße erhöht die Widerstandsfähigkeit des Fensters gegen mögliche Bildelementfehler. Eine große Anzahl der Bildelemente in einem Fenster erlaubt es, fehlerhafte Bildelemente zu ignorieren. Gleichzeitig vermindert die optimale Fenstergröße die Anzahl der möglichen Zustandsmissinterpretationen. Objekte in der Ferne sind kleiner in einem Bild und können einfacher mit dem Hintergrund vermischt werden als naheliegende Objekte.

Bei Ausführungsbeispielen ist der Parameterberechner ausgebildet, um eine Winkelkorrektur auf die einzelnen Fenster der Aufnahmeinformation vor der Berechnung der Parameter anzuwenden. Jedes Bildelement des Fensters wird abhängig von dem Winkel des eintreffendes Lichtes zur Fahrbahnoberfläche korrigiert. Eine Korrektur für ein Fenster, das einen nahen Fahrbahnoberflächenteil repräsentiert, unterscheidet sich von einer Korrektur für ein Fenster, das einen fernen Fahrbahnoberflächenteil repräsentiert.

Der Winkel der Kamera zur Straße kann mit bekannten Fensterpositionen im Bild bestimmt werden. Wenn der Öffnungswinkel der Kamera zum Beispiel 22° ist, sind die Pixel am oberen Rand des Bildes bei <1° und die am unteren Rand bei ungefähr 22° zur Fahrbahnoberfläche geneigt. Das macht einen deutlichen Unterschied im Reflexionsverhalten aus. Eine Winkelkorrektur kann diese Unterschiede minimieren.

Bei Ausführungsbeispielen ist der Klassifizierer ausgebildet, um jedes Tupel einem Zustand abhängig von einem Winkel des eintreffendes Lichtes zur Fahrbahnoberfläche zuzuordnen.

Der Winkel der Kamera zur Straße kann mit bekannten Fensterpositionen im Bild bestimmt werden. Wenn der Öffnungswinkel der Kamera zum Beispiel 22° ist, sind die Pixel am oberen Rand des Bildes bei <1° und die am unteren Rand bei ungefähr 22° zur Fahrbahnoberfläche. Das macht einen deutlichen Unterschied im Reflexionsverhalten aus. Mithilfe von deutlich mehr Trainingsdaten kann das Einbeziehen dieser Winkelinformationen zu einer genaueren Klassifizierung führen.

Ausführungsbeispiele der Erfindung schaffen ein Fortbewegungsmittel oder ein Fahrzeug mit der Vorrichtung und einer Schnittstelle. Die Schnittstelle ist ausgebildet, um eine Fahrerin oder einen Fahrer des Fortbewegungsmittels zu alarmieren und/oder um eine Steuerung des Fortbewegungsmittels zu beeinflussen, falls die Vorrichtung einen festen Zustand des Wassers detektiert.

Die Vorrichtung des Fortbewegungsmittels ermöglicht ein sicheres Fahren durch eine präventive Lokalisierung und Erkennung von Nassbereichen, Pfützen und Eis- oder Schneeformationen, um die tatsächliche Gefahr oder das tatsächliche Risiko eines Traktionsverlustes abzuleiten. Die präventive Gefahrerkennung vor dem tatsächlichen Traktionsverlust kann ein System in die Lage versetzen, über die Schnittstelle den Fahrer zu alarmieren oder die Steuerung des Fortbewegungsmittels zu beeinflussen.

Weitere Ausführungsbeispiele gemäß der vorliegenden Erfindung schaffen entsprechende Verfahren bzw. Computerprogramme.

Ausführungsbeispiele gemäß der vorliegenden Erfindung schaffen eine Vorrichtung und ein Verfahren zur Erkennung von Wasser und Eis auf Fahrbahnoberflächen durch Einbeziehung von wasserspezifischen optischen Eigenschaften.

Ausführungsbeispiele gemäß der vorliegenden Erfindung werden nachfolgend bezugnehmend auf die beiliegenden Figuren näher erläutert.

Fig. 1      zeigt eine schematische Darstellung eines Ausführungsbeispiels einer Vorrichtung mit einer Eingangsschnittstelle, einem Bildteiler, einem Parameterberechner und ei-nem Klassifizierer;

Fig. 2      zeigt eine schematische perspektivische Darstellung einer Fahrbahnoberfläche und einen Rahmen, der eine Aufnahmeinformation der Fahrbahnoberfläche repräsentiert, mit zwei Fenstern, die unterschiedliche Größen haben;

Fig. 3      zeigt ein dreidimensionales Diagramm, bei dem jeder Punkt ein Fenster repräsentiert und wobei die X-, Y-, Z-Koordinaten drei Parameter des Fensters repräsentieren, nämlich die Parameter Absorptionskontrastparameter, Polarisationskontrastparameter und Reflexionsintensitätsparameter.

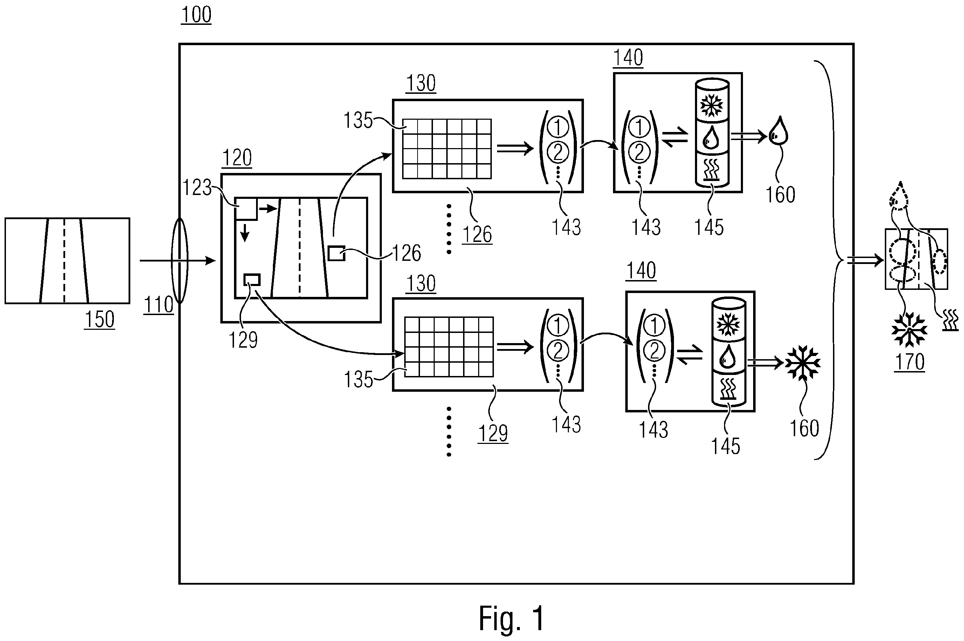

Fig. 1 zeigt eine schematische Darstellung eines Ausführungsbeispiels einer Vorrichtung 100 zum Erkennen eines Zustands einer Fahrbahnoberfläche. Die Vorrichtung weist eine Eingangsschnittstelle 110, einen Bildteiler 120, einen Parameterberechner 130 und einen Klassifizierer 140 auf.

Die Eingangsschnittstelle 110 ist ausgebildet, um eine Aufnahmeinformation 150 der Fahrbahnoberfläche zu erhalten und an den Bildteiler 120 weiterzugeben.

Der Bildteiler 120 teilt die Aufnahmeinformation 150 in eine Mehrzahl von Fenstern auf und gibt die Fenster, wie zum Beispiel die Fenster 123, 126, und 129, an den Parameterberechner 130 weiter.

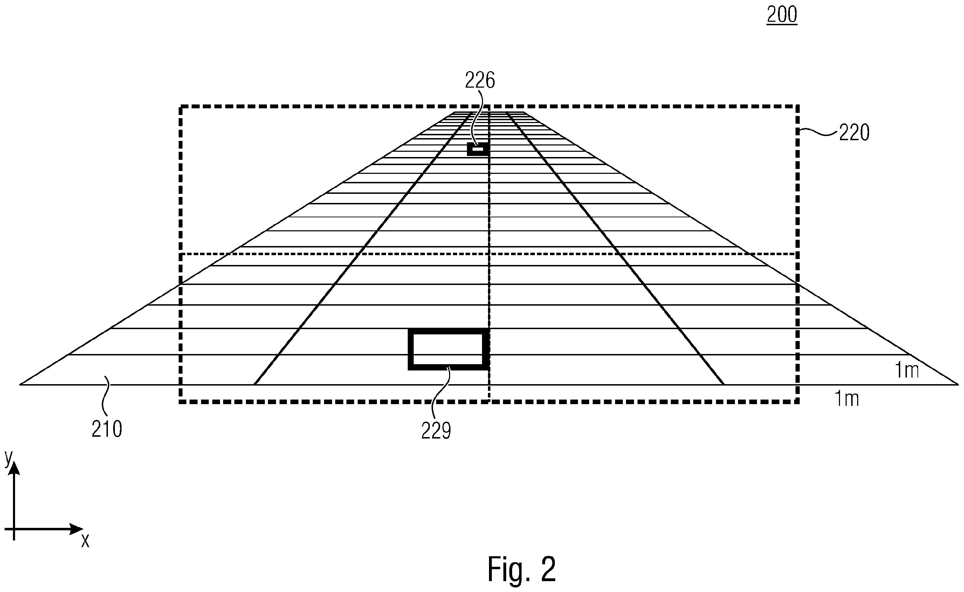

Neben den vorbestimmten Fenstergrößen kann der Bildteiler 120 auch eine dynamische Fenstergröße verwenden. Bei einer dynamischen Fenstergröße wird die Fenstergröße je nach Fensterposition im Bild automatisch geregelt. Ein Beispiel für eine dynamischen Fenstergröße befindet sich in Figur 2.

Jedes Fenster weist eine Mehrzahl von Bildelementen 135 auf, wobei jedes Bildelement 135 wenigstens zwei verschiedene Informationen aufweist.

Der Parameterberechner 130 ist ausgebildet, um ein Tupel 143 pro Fenster zu erstellen, wobei das Tupel wenigstens zwei Parameter umfasst. Die wenigstens zwei Parameter werden unter Verwendung der wenigstens zwei verschiedenen Informationen jedes Bildelements berechnet. Das Tupel 143 wird an den Klassifizierer 140 weitergegeben.

Der Klassifizierer 140 umfasst einen Speicher 145 und/oder eine Datenbank 145 mit verschiedenen möglichen Zustandsinformationen. Der Klassifizierer 140 ist ausgebildet, um jedes Tupel 143 mit einer Mehrzahl von Zustandsinformationen, die in dem Speicher 145 und/oder in der Datenbank 145 gespeichert sind, zu vergleichen und um anhand dieses Vergleichs den Zustand 160 des Fensters 126 oder 129 der Aufnahmeinformation 150 zu erkennen.

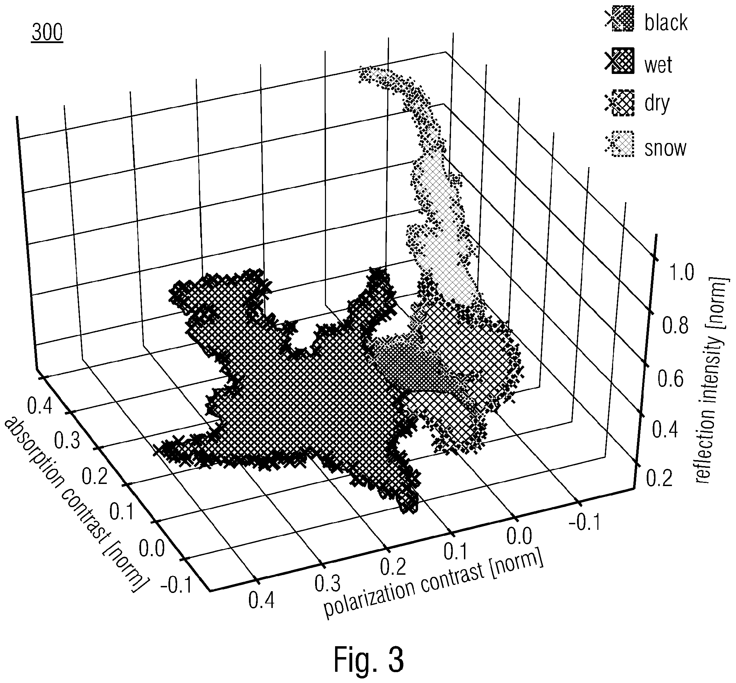

Die Zustandsinformationen, die in dem Speicher 145 und/oder in der Datenbank 145 gespeichert sind, können zum Beispiel in einem 3D-Plot, ähnlich wie der 3D-Plot 300 in Fig. 3, visualisiert werden.

Der Zustand 170 der gesamten Aufnahmeinformation 150 ist aus den Zuständen 160 der einzelnen Fenster zusammengestellt. Hierbei kann der Klassifizierer 140 mehrere nebeneinander angeordnete Fenster mit gleichem Zustand gemeinsam klassifizieren.

Fig. 2 zeigt eine schematische perspektivische Darstellung 200 einer Fahrbahnoberfläche 210 mit einem Rastermuster. Jedes Kästchen des Rastermusters repräsentiert einen 1m x 1m quadratischen Bereich auf der Straße. Fig. 2 zeigt noch einen Rahmen 220, der eine Aufnahmeinformation 220 der Fahrbahnoberfläche repräsentiert. Die Aufnahmeinformation 220 ist ähnlich wie die Aufnahmeinformation 150 in Fig. 1. Die Aufnahmeinformation 220 weist zwei Fenster 226 und 229 mit unterschiedlichen Fenstergrößen auf.

Die Aufnahmeinformation 220 wird wie die Aufnahmeinformation 150 in Fig. 1 über die Eingangsschnittstelle 110 an den Bildteiler 120 weitergegeben. Der Bildteiler ist ausgebildet, um die Aufnahme 220 in eine Mehrzahl von Fenstern aufzuteilen. Das aufgenommene Bild bzw. die Aufnahmeinformation in dem Rahmen 220 wird mithilfe von den Fenstern analysiert.

Hierbei wird ein Fenster, wie zum Beispiel das Fenster 226 oder 229, ausgewählt um das aufgenommene Bild bzw. einen Teil des aufgenommenen Bildes zu analysieren. Die Größe des Fensters wird in Anzahl von Pixeln bzw. Bildelementen in x- und y-Ausrichtung beschrieben: $n_x$ x $n_y$. Eine höhere Pixelanzahl hilft dabei, einzelne Pixelfehler oder Missinterpretationen durch Mittelung zu verhindern, was aber wiederum die benötigte Rechenleistung erhöht, um die Operation, d. h. die Parameterberechnung und/oder die Klassifizierung, noch schnell genug ausführen zu können. Ist aber das gewählte Fenster deutlich größer als die zu identifizierenden Objekte, werden die Objekte durch eine Mittelung mit dem Hintergrund vermischt.

Neben den vorbestimmten Fenstergrößen von, zum Beispiel, 8x4, 8x8, 16x16, 32x32 kann der Bildteiler 120 in Fig. 1 eine dynamische Fenstergröße verwenden. Bei dynamischer Fenstergröße wird die Fenstergröße je nach Fensterposition im Bild automatisch geregelt.

Figur 2 zeigt zwei Fenster 226 und 229 mit unterschiedlichen Größen. Das Fenster 226 im oberen Bereich des Bildes ist deutlich kleiner als das Fenster 229 im unteren Bereich des Bildes. Die Größen der Fenster 226, 229 sind bildpositionsabhängig oder dynamisch festgelegt. Der Abstand eines Oberflächenbereichs zur Kamera ändert sich mit der Höhe bzw. mit der Y-Koordinate der Bildposition. Oberflächenbereiche in der Ferne sind in dem Bild kleiner als die naheliegenden Oberflächenbereiche und befinden sich in dem oberen Bereich des Bildes. Somit wird die optimale Fenstergröße in einem oberen Bereich des Bildes kleiner sein als die optimale Fenstergröße in einem unteren Bereich des Bildes. Die dynamische Fenstergröße garantiert die nötige Genauigkeit für weit entfernte Abschnitte bzw. Fenster und ermöglicht weiterhin eine gute Mittelung für nähere Objekte.

Die Sensoraufnahmen werden Pixel für Pixel oder Bildelement für Bildelement mit dem gewählten Fenster oder mit dem dynamischen Fenster abgetastet und die Daten aus den Teilbildern oder Fenstern verarbeitet. Die Pixelanzahl im Fenster wird mit der Formel n = $n_x \cdot n_y$ berechnet. Bei dynamischer Fenstergröße wird die Pixelanzahl der Fenster abhängig von der Fensterposition im Bild dynamisch definiert.

Jedes Fenster weist eine Mehrzahl von Bildelementen, zum Beispiel n Bildelemente, auf, wobei jedes Bildelement wenigstens zwei verschiedene Informationen umfasst. Unter Verwendung der wenigstens zwei verschiedenen Informationen wird der Parameterberechner, wie zum Beispiel der Parameterberechner 130 in Fig. 1, wenigstens zwei Parameter pro Fenster aus der Gruppe Absorptionskontrastparameter, Polarisationskontrastparameter und Reflexionsintensitätsparameter erstellen. Beispielsweise kann der Parameterberechner die wenigstens zwei Parameter derart berechnen, dass die Werte der wenigstens zwei Parameter innerhalb von ±20% der Ergebnisse der folgenden Formel aufweisen:

$$abs_{contrast} = \frac{1}{n} \sum_{i=1}^{n} \frac{I_{850}(i) - I_{950}(i)}{I_{850}(i) + I_{950}(i)},$$

$$pol_{contrast} = \frac{1}{n} \sum_{i=1}^{n} \frac{I_{pol1}(i) - I_{pol2}(i)}{I_{pol1}(i) + I_{pol2}(i)},$$

$$ref_{mean} = \frac{1}{n} \sum_{i=1}^{n} \frac{I_{pol1}(i) + I_{pol2}(i) + I_{850}(i)}{3},$$

dabei sind:

| | |
|---|---|
| $abs_{contrast}$: | Absorptionskontrastparameter; |
| $pol_{contrast}$: | Polarisationskontrastparameter; |
| $ref_{mean}$: | Reflexionsintensitätsparameter; |
| n: | Bildelementanzahl im Fenster; |
| i: | Index eines Bildelements im Fenster; |
| $I_{850}(i)$: | Intensitätswert der ersten Sensoraufnahme des i-ten Bildelements im Fenster; |
| $I_{950}(i)$: | Intensitätswert der zweiten Sensoraufnahme des i-ten Bildelements im Fenster; |
| $I_{pol1}(i)$: | Intensitätswert der dritten Sensoraufnahme des i-ten Bildelements im Fenster und |
| $I_{pol2}(i)$: | Intensitätswert der vierten Sensoraufnahme des i-ten Bildelements im Fenster. |

Die wenigstens zwei Parameter des Fensters können als ein Tupel repräsentiert werden und jedes Tupel kann in einem 3D-Plot, ähnlich wie der 3D-Plot 300 in Figur 3, dargestellt werden.

Fig. 3 zeigt ein dreidimensionales Diagramm oder einen 3D-Plot 300, bei dem jeder Punkt ein Fenster, ähnlich wie die Fenster 226 und 229 in Fig. 2, repräsentiert. Die X-, Y-, Z-Koordinaten eines Punktes in dem 3D-Plot stehen für die drei Parameter eines Fensters, nämlich die Parameter Absorptionskontrastparameter, Polarisationskontrastparameter und Reflexionsintensitätsparameter.

Der 3D-Plot 300 wurde aus mehreren Fenstern erstellt, die unterschiedlichen Fahrbahnoberflächen mit unterschiedlichen Zuständen repräsentieren. Die Zustandsdateien in der Datenbank des Klassifizierers können zum Beispiel mit dem 3D-Plot 300 visualisiert werden. Die Parameter der Fenster und die dazugehörigen Zustände sind in dem Speicher oder in der Datenbank des Klassifizierers gespeichert. In dem 3D-Plot 300 sind die Zustände "Glatteis", "nass", "trocken" und "Schnee" mit Farben oder mit unterschiedlicher Schattierung repräsentiert.

Der Klassifizierer wird ein neues Fenster bzw. einen neuen Punkt in diesem 3D-Plot 300 hinzufügen und anhand der Position bzw. des Bereichs des neuen Punktes den Zustand des Fensters erkennen.

Es wird schnell ersichtlich, dass Messungen von Bereichen gleicher Straßenzustände Tupel ergeben, die sich im selben Bereich wiederfinden. Dies erlaubt eine messtechnische Trennung, also Klassifizierung der Zustände. Zeichnen sich deutliche Wolken bzw. Bereiche ab, die klar getrennt sind, dann können die Zustände auch tatsächlich messtechnisch voneinander getrennt werden. Der besondere Vorteil ist, dass das Verfahren nicht auf ein Objekterkennungsverfahren eines z. B. mehrstufigen faltenden neuronalen Netzwerks basiert, das erst generell Objekte sucht und diese mit Ankern markiert, um diese in einem weiteren Schritt zu markieren oder labeln, sondern unabhängig von dem Gesamtbild nur die einzelnen Fenster bewertet. Dies macht das erfindungsgemäße Konzept nicht nur sehr robust gegen Störungen, wie Objekte, die im Weg stehen, sondern das erfindungsgemäße Konzept lässt sich auch leicht nachvollziehen, und somit auch einfach hinsichtlich seiner Funktion überprüfen.

Die Qualität der Erkennung hängt von der Anzahl der Daten ab. Mit zusätzlichen Daten kann eine noch feinere Verwendung der Zustände erreicht werden. Hierbei kann es sich um die tatsächlichen Daten handeln, die mit weiteren Kameras oder Filtern aufgenommen werden oder auch um Informationen, die mit verschiedenen Verfahren aus den vorhandenen Kamerabildern extrahiert werden.

Zusätzlich kann der Klassifizierer auch die Fensterposition bzw. den Abstand zur Kamera berücksichtigen. Mit der bekannten Fensterposition im Bild kann der Winkel der Kamera zur Straße bestimmt werden. Zum Beispiel war der Öffnungswinkel der Kameras im Ausführungsbeispiel 22°. Damit sind die Pixel am oberen Rand des Bildes bei unter 1° und die am unteren Rand bei gegen 22° zur Fahrbahnoberfläche geneigt, was einen deutlichen Unterschied im Reflexionsverfahren ausmacht. Das Einbeziehen dieser Informationen kann zu einer genaueren Klassifizierung führen, benötigt aber mehr Trainingsdaten.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahingehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahingehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahingehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Eine Vorrichtung (100) zum Erkennen eines Zustands (160, 170) einer Fahrbahnoberfläche (210), mit folgenden Merkmalen:

einer Eingangsschnittstelle (110) zum Erhalten einer Aufnahmeinformation (150, 220) der Fahrbahnoberfläche;
einem Bildteiler (120) zum Aufteilen der Aufnahmeinformation in eine Mehrzahl von Fenstern (123, 126, 129, 226, 229), wobei jedes Fenster eine Mehrzahl von Bildelementen (135) aufweist, wobei jedes Bildelement wenigstens zwei verschiedene Informationen aufweist;
einem Parameterberechner (130) zum Berechnen von wenigstens zwei Parametern pro Fenster unter Verwendung der wenigstens zwei verschiedenen Informationen jedes Bildelementes in dem Fenster; und
einem Klassifizierer (140) zum Klassifizieren des Fensters anhand eines Tupels (143) aus den wenigstens zwei Parametern des Fensters, wobei der Klassifizierer ausgebildet ist, um anhand des Tupels aus den wenigstens zwei Parametern des Fensters als Eingangswerte einen Zustand des Fensters zu erkennen und den Zustand (160, 170) des Fensters als Ausgangswert (160, 170) auszugeben.

2. Die Vorrichtung (100) gemäß Anspruch 1, bei der die Eingangsschnittstelle (110) ausgebildet ist, entweder um die Aufnahmeinformation (150, 220) von einem Sensor zu erhalten, oder um mehrere Sensoraufnahmen zu erhalten und die Aufnahmeinformation (150, 220) aus den erhaltenen Sensoraufnahmen zusammenzustellen,
wobei die Aufnahmeinformation (150, 220) der Fahrbahnoberfläche (210) pro Bildelement (135) wenigstens zwei Sensoraufnahmen aus der folgenden Gruppe von Sensoraufnahmen aufweist:

eine erste Sensoraufnahme der Fahrbahnoberfläche (210) mit einer ersten optischen Bandbreite, in der das Wasser eine erste Absorptionsrate hat,
eine zweite Sensoraufnahme der Fahrbahnoberfläche (210) mit einer zweiten optischen Bandbreite, in der das Wasser eine zweite Absorptionsrate hat, die höher als die erste Absorptionsrate ist,
eine dritte Sensoraufnahme mit einem ersten Polarisationsfilter mit einem ersten Polarisationswinkel, und
eine vierte Sensoraufnahme mit einem zweiten Polarisationsfilter mit einem zweiten Polarisationswinkel, wobei sich die zwei Polarisationsfilter voneinander in ihren Polarisationswinkeln unterscheiden.

3. Die Vorrichtung (100) gemäß Anspruch 2, bei der die erste optische Bandbreite eine Bandbreite umfasst, die aus einem Spektralbereich zwischen 400 nm und 900 nm ausgewählt ist; und die zweite optische Bandbreite eine Bandbreite umfasst, die aus einem Spektralbereich zwischen 900 nm und 1200 nm ausgewählt ist,
oder

bei der die erste optische Bandbreite bei einer Halbwertsbreite einen Wert zwischen 820 nm und 870 nm aufweist; und die zweite optische Bandbreite bei der Halbwertsbreite einen Wert zwischen 920 nm und 970 nm aufweist,
oder
bei der der Polarisationswinkel des ersten Polarisationsfilters und der Polarisationswinkel des zweiten Polarisationsfilters 90° zueinander versetzt dimensioniert sind.

4. Die Vorrichtung (100) gemäß einem der Ansprüche 1 bis 3, bei der der Klassifizierer (140) einen Speicher (145) aufweist, in dem für jedes Eingangstupel (143) einer Mehrzahl von möglichen Tupeln (143) eine zugeordnete Zustandsinformation (160, 170) einer Mehrzahl von verschiedenen Zustandsinformationen (160, 170) abgespeichert ist, wobei die Mehrzahl von verschiedenen Zustandsinformationen (160, 170) z. B. einen Zustand trocken, einen Zustand nass, einen Zustand Schnee und einen Zustand Glatteis aufweist.

5. Die Vorrichtung (100) gemäß Anspruch 4, bei der der Klassifizierer (140) ausgebildet ist, um die wenigstens zwei Parameter des Tupels (143) auf Werte aus einem vorhandenen Eingangstupel (143) zu runden, und dann unter Verwendung des vorhandenen Eingangstupels (143) auf den Speicher zuzugreifen, oder bei der der Klassifizierer (140) ausgebildet ist, um auf der Basis des Tupels (143) für das Fenster (123, 126, 129, 226, 229) ein Eingangstupel (143) auszuwählen, der dem Tupel (143) für das Fenster (123, 126, 129, 226, 229) gemäß einem Kriterium am nächsten kommt, und um dann mit dem gewählten Tupel (143) auf den Speicher (145) zuzugreifen, um den Zustand für das Fenster (123, 126, 129, 226, 229) zu erhalten, wobei das Kriterium beispielsweise eine kleinste aufaddierte quadratische Abweichung der wenigstens zwei Parameter des Tupels (143) für das Fenster (123, 126, 129, 226, 229) von den vorhandenen Eingangstupeln (143) ist.

6. Die Vorrichtung (100) gemäß einem der Ansprüche 1 bis 5, bei der der Klassifizierer (140) ausgebildet ist, um für jedes der Mehrzahl von Fenstern (123, 126, 129, 226, 229) ein eigenes Tupel (143) zu verwenden, um anhand jedes Tupels (143) einen Zustand (160, 170) jedes Fensters (123, 126, 129, 226, 229) zu erkennen und den Zustand (160, 170) jedes Fensters (123, 126, 129, 226, 229) der Aufnahmeinformation (150, 220) der Fahrbahnoberfläche (210) als Ausgangsgröße (160, 170) auszugeben.

7. Die Vorrichtung (100) gemäß Anspruch 6, bei der der Klassifizierer (140) ausgebildet ist, um unter Verwendung von Zuständen (160, 170) von benachbarten Fenstern (123, 126, 129, 226, 229) zusammenhängende Bereiche aus mehreren nebeneinander angeordneten Fenstern (123, 126, 129, 226, 229) blockweise zu klassifizieren.

8. Die Vorrichtung (100) gemäß einem der Ansprüche 1 bis 7, bei der der Parameterberechner (130) ausgebildet ist, um wenigstens zwei Parameter aus der Gruppe Absorptionskontrastparameter, Polarisationskontrastparameter und Reflexionsintensitätsparameter zu berechnen.

9. Die Vorrichtung (100) gemäß Anspruch 8, bei der der Parameterberechner (130) ausgebildet ist, um den Absorptionskontrastparameter derart zu berechnen, dass der Wert des Absorptionskontrastparameters eine Zahl innerhalb von ±20% eines Ergebnisses der folgenden Formel aufweist:

$$abs_{contrast} = \frac{1}{n}\sum_{i=1}^{n}\frac{I_{850}(i)-I_{950}(i)}{I_{850}(i)+I_{950}(i)},$$

dabei sind:

$abs_{contrast}$: das Ergebnis;
n: Bildelementanzahl im Fenster (123, 126, 129, 226, 229);
i: Index eines Bildelements im Fenster (123, 126, 129, 226, 229);
$I_{850}(i)$: Intensitätswert der ersten Sensoraufnahme des i-ten Bildelements (135) im Fenster (123, 126, 129, 226, 229), und
$I_{950}(i)$: Intensitätswert der zweiten Sensoraufnahme des i-ten Bildelements (135) im Fenster (123, 126, 129, 226, 229),

oder.

bei der der Parameterberechner (130) ausgebildet ist, um den Polarisationskontrastparameter derart zu berechnen, dass der Wert des Absorptionskontrastparameters eine Zahl innerhalb von ±20% eines Ergebnisses der folgenden Formel aufweist:

$$pol_{contrast} = \frac{1}{n}\sum_{i=1}^{n}\frac{I_{pol1}(i)-I_{pol2}(i)}{I_{pol1}(i)+I_{pol2}(i)},$$

dabei sind:

$pol_{contrast}$: das Ergebnis;
n: Bildelementanzahl im Fenster (123, 126, 129, 226, 229);
i: Index eines Bildelements im Fenster (123, 126, 129, 226, 229);
$I_{pol1}(i)$: Intensitätswert der dritten Sensoraufnahme des i-ten Bildelements (135) im Fenster (123, 126, 129, 226, 229), und
$I_{pol2}(i)$: Intensitätswert der vierten Sensoraufnahme des i-ten Bildelements (135) im Fenster (123, 126, 129, 226, 229),

oder
bei der der Parameterberechner (130) ausgebildet ist, um den Reflexionsintensitätsparameter derart zu berechnen, dass der Wert des Reflexionsintensitätsparameters eine Zahl innerhalb von ±20% eines Ergebnisses der folgenden Formel aufweist:

$$ref_{mean} = \frac{1}{n} \sum_{i=1}^{n} \frac{I_{pol1}(i) + I_{pol2}(i) + I_{850}(i)}{3} \, ,$$

dabei sind:

$ref_{mean}$: das Ergebnis;
n: Bildelementanzahl im Fenster (123, 126, 129, 226, 229);
i: Index eines Bildelements im Fenster (123, 126, 129, 226, 229);
$I_{pol1}(i)$: Intensitätswert der dritten Sensoraufnahme des i-ten Bildelements (135) im Fenster (123, 126, 129, 226, 229),
$I_{pol2}(i)$: Intensitätswert der vierten Sensoraufnahme des i-ten Bildelements (135) im Fenster (123, 126, 129, 226, 229), und
$I_{850}(i)$: Intensitätswert der ersten Sensoraufnahme des i-ten Bildelements (135) im Fenster (123, 126, 129, 226, 229).

10. Die Vorrichtung (100) gemäß einem der Ansprüche 1 bis 9, bei der der Bildteiler (120) ausgebildet ist, um die Aufnahmeinformation (150, 220) in eine Mehrzahl von nicht überlappenden Fenstern (123, 126, 129, 226, 229) aufzuteilen.

11. Die Vorrichtung (100) gemäß einem der Ansprüche 1 bis 10, bei der der Bildteiler (120) ausgebildet ist, um die Aufnahmeinformation (150, 220) in eine Mehrzahl von Fenstern (123, 126, 129, 226, 229) mit positionsabhängiger Fenstergröße aufzuteilen, wobei das Fenster (123, 126, 129, 226, 229), das einen nahen Fahrbahnoberflächenteil repräsentiert größer ist als das Fenster, das einen fernen Fahrbahnoberflächenteil repräsentiert.

12. Die Vorrichtung (100) gemäß einem der Ansprüche 1 bis 11, bei der der Parameterberechner (130) ausgebildet ist, um eine Winkelkorrektur auf die einzelnen Fenster (123, 126, 129, 226, 229) der Aufnahmeinformation (150, 220) vor der Berechnung der Parameter anzuwenden, wobei jedes Bildelement (135) des Fensters (123, 126, 129, 226, 229) abhängig von einem Winkel des eintreffendes Lichtes zur Fahrbahnoberfläche (210) korrigiert wird, und wobei eine Korrektur für das Fenster (123, 126, 129, 226, 229), das einen nahen Fahrbahnoberflächenteil repräsentiert, sich von einer Korrektur für ein Fenster unterscheidet, das einen fernen Fahrbahnoberflächenteil repräsentiert,
oder
bei der der Klassifizierer (140) ausgebildet ist, um jedes Tupel (143) einem Zustand (160, 170) abhängig von einem Winkel des eintreffendes Lichtes zur Fahrbahnoberfläche (210) zuzuordnen.

13. Ein Fortbewegungsmittel mit der Vorrichtung (100) gemäß einem der Ansprüche 1 bis 12, und einer Schnittstelle, wobei die Schnittstelle ausgebildet ist, um einen Fahrer des Fortbewegungsmittels zu alarmieren und/oder um eine Steuerung des Fortbewegungsmittels zu beeinflussen, falls die Vorrichtung einen festen Zustand des Wassers detektiert.

14. Ein Verfahren zum Erkennen eines Zustands (160, 170) einer Fahrbahnoberfläche (210) mit folgenden Schritten:

Erhalten einer Aufnahmeinformation (150, 220) der Fahrbahnoberfläche (210);
Aufteilen der Aufnahmeinformation (150, 220) in eine Mehrzahl von Fenstern (123, 126, 129, 226, 229), wobei jedes Fenster (123, 126, 129, 226, 229) eine Mehrzahl von Bildelementen (135) aufweist, wobei jedes Bildelement (135) wenigstens zwei verschiedene Informationen aufweist;
Berechnen von wenigstens zwei Parametern pro Fenster (123, 126, 129, 226, 229) unter Verwendung der wenigstens zwei verschiedenen Informationen jedes Bildelementes in dem Fenster (123, 126, 129, 226, 229); und
Klassifizieren des Fensters (123, 126, 129, 226, 229) anhand eines Tupels (143) aus den wenigstens zwei Parametern des Fensters (123, 126, 129, 226, 229), um anhand des Tupels (143) aus den wenigstens zwei Parametern des Fensters (123, 126, 129, 226, 229) einen Zustand (160, 170) des Fensters (123, 126, 129, 226, 229) zu erhalten.

15. Ein Computerprogramm zur Durchführung des Verfahrens gemäß Anspruch 14, wenn das Computerprogramm auf einem Computer oder einem Prozessor abläuft.

Fig. 1

Fig. 2

EP 4 148 683 A1

Fig. 3

**Europäisches Patentamt**
**European Patent Office**
**Office européen des brevets**

# EUROPÄISCHER RECHERCHENBERICHT

**Nummer der Anmeldung**

**EP 22 19 4388**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2018 132525 A1 (GM GLOBAL TECH OPERATIONS LLC [US]) 19. Juni 2019 (2019-06-19) | 1,4-7, 10,11, 13-15 | INV. G06V10/143 G06V20/56 |
| Y | * Zusammenfassung * | 2,3,8 | |
| A | * Abbildungen 2-7 * * Absätze [0001] – [0006], [0018] – [0037], [0056] * | 9,12 | |
| Y | US 2017/124402 A1 (TANAKA TSUBASA [JP] ET AL) 4. Mai 2017 (2017-05-04) | 2,3,8 | |
| A | * Zusammenfassung * * Absätze [0003], [0007], [0008], [0018], [0038], [0049] * * Abbildungen 1-3 * | 1,4-7, 9-15 | |

**RECHERCHIERTE SACHGEBIETE (IPC)**

G06V

Der vorliegende Recherchenbericht wurde für alle Patentansprüche erstellt

| Recherchenort | Abschlußdatum der Recherche | Prüfer |
|---|---|---|
| Den Haag | 22. Dezember 2022 | Philips, Petra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................................
& : Mitglied der gleichen Patentfamilie, übereinstimmendes Dokument

EPO FORM 1503 03.82 (P04C03)

**EP 4 148 683 A1**

**ANHANG ZUM EUROPÄISCHEN RECHERCHENBERICHT
ÜBER DIE EUROPÄISCHE PATENTANMELDUNG NR.**

EP 22 19 4388

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-12-2022

| Im Recherchenbericht angeführtes Patentdokument | Datum der Veröffentlichung | Mitglied(er) der Patentfamilie | Datum der Veröffentlichung |
|---|---|---|---|
| DE 102018132525 A1 | 19-06-2019 | CN 109941286 A | 28-06-2019 |
| | | DE 102018132525 A1 | 19-06-2019 |
| | | US 2019188495 A1 | 20-06-2019 |
| US 2017124402 A1 | 04-05-2017 | CN 106627586 A | 10-05-2017 |
| | | JP 6361631 B2 | 25-07-2018 |
| | | JP 2017083352 A | 18-05-2017 |
| | | US 2017124402 A1 | 04-05-2017 |

EPO FORM P0461

Für nähere Einzelheiten zu diesem Anhang : siehe Amtsblatt des Europäischen Patentamts, Nr.12/82

15